# EUROPEAN PATENT APPLICATION

(11) **EP 1 541 342 A2**
(43) Date of publication of application: **15.06.2005**
(21) Application number: 04029450.6
(22) Date of filing: 13.12.2004
(51) Int. Cl.: B32B 27/32, A61J 1/00

(54) **Medical freezer bag**

(30) Priority: 12.12.2003 JP 2003414853
(71) Applicant: Nipro Corporation, Osaka-shi, Osaka 531-8510 (JP)
(72) Inventor: Yoshikawa, Yoshihiro NIPRO Corporation, Osaka-shi Osaka, 531-8510 (JP); Shirasu, Akio NIPRO Corporation, Osaka-shi Osaka, 531-8510 (JP); Wada, Seiichi NIPRO Corporation, Osaka-shi Osaka, 531-8510 (JP); Akimoto, Yoshiyuki NIPRO Corporation, Osaka-shi Osaka, 531-8510 (JP); Sasaki, Yuji NIPRO Corporation, Osaka-shi Osaka, 531-8510 (JP); Takeda, Kazuyuki NIPRO Corporation, Osaka-shi Osaka, 531-8510 (JP)
(74) Representative: Albrecht, Thomas, Dr.

(57) **Abstract**

A medical freezer bag having a sufficient strength, which is not damaged at -196°C, the temperature of liquid nitrogen, and is excellent in low temperature resistance and molding processability, whole blood, body fluids, and cell suspension can be aseptically or nontoxically preserved at extremely low temperatures, is provided. The freezer bag is made from a three-layer film where both sides of an ultra-high molecular weight polyethylene film are welded respectively with a thermoplastic resin film having a lower melting point than that of the ultra-high molecular weight polyethylene and having compatibility with the ultra-high molecular weight polyethylene.

## Description

### Technical Field of the Invention

Thepresentinventionrelatestoamedicalfreezerbagincluding a three-layer film where both sides of an ultra-high molecular weight polyethylene film are welded respectively, i.e., laminated with thermoplastic resin films having a lower melting point than that of the ultra-high molecular weight polyethylene and having compatibility with the ultra-high molecular weight polyethylene.

### Background of the Invention

As a method of storing blood components in a frozen state, a method of storing blood components at extremely low temperatures ranging from approximately -80 to -196°C with the addition of a freezing damage preventive agent such as dimethyl sulfoxide has been known. Under this kind of storage at extremely low temperatures, there is a need for a freezer bag which can be used at extremely low temperatures and can be sterilized and is easy to use. A soft polyvinyl chloride bag used for blood preservation becomes brittle at -40°C and is damaged by an extremely slight shock from the outside at extremely low temperatures.

Therefore, a bag including a laminate film composed of a polyimide film and a fluorinated ethylene propylene polymer film (JP Sho 49-8079 B), a bag including a copolymer film of tetrafluoroethylene and ethylene (Japanese Utility Model Examined Publication No. Sho 55-55069), and so on, have been proposed as bags for storing blood components at extremely low temperatures ranging from -80 to -196°C. However, polyimide, among polymeric materials, is one of those having the lowest thermal conductivity. Thus, the freezing speed of the polyimide is low and influences the quality of ingredients. Moreover, a polyimide resin and a fluorocarbon resin have extremely high melting points. Thus, they have poor molding processability.

Proposed as freezer bags made of resins other than polyimide resins and fluorocarbon resins are one using a biaxially-stretched ethylene-vinyl acetate copolymer film with electron beam irradiation (JPSho 55-44977 B, USP 4, 112, 989) andoneusingabiaxially-stretched cross-linked polyethylene film (JP Sho 62-57351 B). However, the stretched film is wrinkled as the film is shrunk at a sealing portion and at the periphery thereof by a heat-sealing operation. In actual use, there is a disadvantage in that the bag is often damaged through rough handling and the contents thereof cannot be safely preserved. In addition, the above laminate film is bonded using an adhesive agent such as a polyester-, polyurethane-, or epoxy-based adhesive agent, so that bonded layers may be hardened during preservation at low temperatures and thus the laminated film may be peeled off. Therefore, it is not suitable as a freezer bag.

An ultra-high molecular weight polyethylene is very excellent in shock resistance, wear resistance, self-swelling property, chemical resistance, andlowtemperature resistance, andisnontoxic, but has an extremely high melt viscosity. Thus, in a typical method of producing a film, a powdered raw material resin is molded into a block shape by means of press-molding or the like, followed by cutting processing. The film formed as described above may have a rough surface, so that molding processing is by no means carried out with ease. If there is mold flash, polyethylene may be peeled off from the surface of the film. When the film is used as a medical bag, the polyethylene will become the cause of contamination with foreign matters. Besides, the process of press-molding tends to incorporate air into the film and thus a pinhole may be formed in the film cut in a subsequent step.

In addition, when heat sealing is made between sheets or between a sheet and a port member, because the ultra-high molecular weight polyethylene has a molecular weight as high as 1,000,000 or more, it is difficult to produce tangled molecular chains because of poor fluidity of a polyethylene molecular chain. Therefore, heat sealing is difficult and thus there is a problem in stable production of a bag.

### Summary of the Invention

Development of a medical freezer bag having excellent low temperature resistance and molding processability has been demanded. More specifically, there is a need for a medical freezer bag having a sufficient strength, which is not damaged even at a temperature of -196°C, i.e., at the temperature of liquid nitrogen.

The present invention has been made in consideration of the conventional technology described above and relates to a medical bag with excellent molding processability, which allows the preservation of blood, body fluids, and cell suspensions at extremely low temperatures without damaging the bag.

That is, the present invention relates to:
(1) a medical freezer bag comprising a three-layer film where each of both sides of an ultra-high molecular weight polyethylene film is welded to a thermoplastic resin film having a lower melting point than that of the ultra-high molecular weight polyethylene and having compatibility with the ultra-high molecular weight polyethylene;
(2) the medical freezer bag according to the item (1), wherein the thermoplastic resin is an ethylene-vinyl acetate copolymer, an ethylene-methacrylic ester copolymer, or a linear low-density polyethylene;
(3) the medical freezer bag according to the item (1), wherein the ultra-high molecular weight polyethylene has a measured viscometric weight average molecular weight of 1,000,000 or more, or a weight average molecular weight of 3, 000, 000 or more measured based on a light scattering method;
(4) the medical freezer bag according to the item (1), wherein the three-layer film has a thickness of approximately 50 to 500 µm;
(5) the medical freezer bag according to the item (4), wherein the three-layer film has a thickness of approximately 100 to 250 µm;
(6) a method of molding a medical freezer bag, characterized by molding (i) a three-layer film obtained by welding each of both sides of an ultra-high molecular weight polyethylene film with a thermoplastic resin film having a lower melting point than that of the ultra-high molecular weight polyethylene and having compatibility with the ultra-high molecular weight polyethylene, and (ii) a port member; and
(7) a method of storing a medical freezer bag, characterized by filling the medical freezer bag with blood, a body fluid, or a cell suspension; and storing the medical freezer bag at a temperature ranging from approximately -80 to -196°C, wherein the medical freezer bag comprises a three-layer film where each of both sides of an ultra-high molecular weight polyethylene film is welded to a thermoplastic resin film having a lower melting point than that of the ultra-high molecular weight polyethylene and having compatibility with the ultra-high molecular weight polyethylene.

### Effects of the Invention

The medical freezer bag of the present invention allows the preservation of blood, body fluids, and cell suspensions at extremely low temperatures without damaging the bag and is excellent in molding processability.

### Detailed Description of the Invention

The medical freezer bag of the present invention is a bag for the preservation of blood, body fluids, and cell suspensions at extremely low temperatures, characterized by including a three-layer film composed of: an ultra-high molecular weight polyethylene film; and thermoplastic resin films laminated on both sides of the ultra-high molecular weight polyethylene film, thermoplastic resin films having a lower melting point than that of the ultra-high molecular weight polyethylene and having compatibility with the ultra-high molecular weight polyethylene (hereinafter, simply referred to as a thermoplastic resin). The total thickness of the three-layer film described above is approximately 50 to 500 µm, preferably 100 to 250 µm. The film of the medical freezer bag of the present invention may be composed of at least the three layers as described above. If required, an additional thermoplastic resin film may be laminated on both sides or one side of the film.

The term "ultra-high molecular weight polyethylene" used in the presentinvention meanspolyethylene thatsatisfiesa viscometric weight average molecular weight of 1, 000, 000 or more or a molecular weight of 3,000,000 or more based on a light scattering method. The upper limit is not specifically defined, but at the present time, approximately 6,000,000 (viscometric molecular weight) may be the upper limit attainable by a person skilled in the art. The ultra-high molecular weight polyethylene is very excellent in shock resistance, wear resistance, self-swelling property, chemical resistance, and low temperature resistance, and non-toxicity as compared with a general-purpose low-density polyethylene and so on.

Furthermore, the ultra-high molecular weight polyethylene film has a high viscosity due to its high molecular weight, so that it can be molded into a block shape by subj ecting a powdered raw material resin to a press-molding process or the like and then molded into a film shape by a cutting process. The thickness of the film is preferably that sufficient to prevent the generation of pinholes, retain sealing strength, and endure rapid freezing and thawing. Specifically, the thickness of the film is preferably about 25 to 250 µm, more preferably about 50 to 150 m.

The term "thermoplastic resin film" used in the present invention means a film which can be adhered to the ultra-high molecular weight polyethylene film, and is improved to such a degree that it cannot be peeled therefrom, and has excellent molding processability. Therefore, there is selected a film having a lower melting point than that of the ultra-high molecular weight polyethylene (approximately 134 to 138°C) and having compatibility with the ultra-high molecular weight polyethylene. The term "compatibility" means a state in which a single peak of glass transition temperature (Tg) of the ultra-high molecular weight polyethylene and the thermoplastic resin, which is determined by measurement with a differential scanning calorimeter (DSC), is observed. In the case of incompatibility, plural peaks of glass transition temperature (Tg) are observed. The thickness of thermoplastic resin film is about 12.5 to 125 µm, preferably about 25 to 75 µm.

Preferable examples of the thermoplastic resin include low-density polyethylene and intermediate-density polyethylene, and furthermore ethylene copolymers such as an ethylene-vinyl acetate copolymer and an ethylene-methacrylic ester copolymer, a thermoplastic resin composition including polyethylene and a hydrogenerated product of styrene butadiene rubber, and a thermoplasticresincompositionofpolypropyleneandahydrogenerated product of styrene butadiene rubber. Among them, a low-density polyethylene and ethylene-vinyl acetate copolymer are preferable and linear low-density polyethylene is more preferable. Here, the used density range of the low-density polyethylene is a density range of about 0.910 to 0.925 g/cm³.

The linear low-density polyethylene can be polymerized under moderate conditions using a catalyst such as a Ziegler-Natta catalyst and a metallocene catalyst. The linear low-density polyethylene has a molecular structure in which a branching structure of general low-density polyethylene is suppressed, so that the molded product thereof is excellent in heat sealing strength, low temperature resistance, and stress-cracking resistance (a property in which degradation cannot take place easily even if it is left in the outside environment for a long period of time). The above polyethylene is processed into the shape of a film after the catalyst is removed, or in a state that a small amount of the catalyst remains therein without removal of the catalyst. However, as the freezer bag of the present invention is for medical use, it is preferable to use a catalyst which remains in the film as little as possible.

A method of producing a three-layer film is carried out by a thermal welding process. Specifically, the thermoplastic resin heat-melted with a heat roller or the like is pushed out onto both sides of the ultra-high molecular weight polyethylene film, followed by bonding them together under pressure. The temperature of the heat roller is preferably about 150 to 250°C, more preferably about 170 to 200°C.

In a method of molding a medical freezer bag with the above three-layer film, two sheets of the three-layer film cut into the same dimensions are overlapped with each other such that a port member for allowing the introduction and discharge of blood, body fluids or cell suspensions is sandwiched between them and the edge portions are welded by means of heat sealing and formed into a bag shape. At this time, the port member may be preferably provided on a corner because the waste of blood, body fluids or cell suspensions, which are valuable, can be lowered as much as possible. Preferably, theportmemberispreparedusingamaterial, suchasultra-low-density polyethylene, which is compatible with a thermoplastic resin film constituting an inner layer and flexible to some extent. In addition, two or more port members may be provided as needed.

An example of the medical freezer bag of the present invention isformedsuchthatathree-layerfilmisformedbyputtinganultra-high molecular weight polyethylene film of 75 µm in thickness between two linear low-density polyethylene films of 50 µm in thickness and adhering the films, cutting the three-layer film into sheets of 150 x 200 mm and then layering two sheets of the three-layer film and subjecting their edge portions to a heat welding process by using a heat sealing process.

Furthermore, another example of the medical freezer bag of the present invention is formed such that a three-layer film is prepared by putting a linear low-density polyethylene film of 75 µm in thickness on one side of an ultra-high molecular weight polyethylene film of 100 µm in thickness and putting a copolymer film of an ethylene-vinyl acetate copolymer on the other side thereof and adhering the films, and cutting the resultant laminate to a size of 150 x 200 mm, followed by overlapping two sheets thereof and heat-welding their edge portions by a heat sealing process.

The above three-layer film is formed such that the thermoplastic resin having a low melting point is laminated on each of both sides of the ultra-high molecular weight polyethylene, so that the peeling of the ultra-high molecular weight polyethylene forming a rough surface can be prevented. Furthermore, in an inner layer, it can be processed easily and stably into a bag shape by using a heat sealing process, etc. and is capable of preventing the peeling of the ultra-high molecular weight polyethylene and the contamination thereofintotheblood,bodyfluidsorcellsuspensions. Furthermore, because the thermoplastic resin provides a smooth surface, there is no fear that living tissues such as blood erythrocytes and cells are damaged. Furthermore, on the outer layer, a polyethylene label or the like is easily attached by heat-sealing, and the contamination by foreign matter from the outside is prevented.

The medical freezer bag of the present invention is suitable for preserving blood components such as erythrocytes, platelets, and plasma, a marrow liquid or such other body fluids, and cell suspensions. Even though the medical freezer bag of the present invention may be sustainable at extremely low temperatures from -80 to -196°C, it is preferable to gradually lower the temperature so as not to damage the tissues in the case of actually preserving blood components such as erythrocytes, platelets, and plasma, a marrow liquid or such other body fluids, and cell suspensions. After being temporarily cooled down to approximately -80°C by a deep freezer (freezing machine), they are transferred into liquid nitrogen for preservation. To use the blood, cells, and the like that have been preserved, for example, they can be thawed by heating means, for example, a warm bath at 37 to 40°C.

Hereinafter, the present invention will be described in detail based on certain examples. However, the present invention is not limited to these examples.

### Example 1

Both sides of a 75 µm-thick cut filmmade of ultra-highmolecular weight polyethylene (approximately 1,500,000 in weight average molecular weight based on viscometric method) (New Light, manufactured by SAXIN CORPORATION, Ltd. Japan) were laminated with a 50 µm-thick linear low-density polyethylene films (Moretec, manufactured by Idemitsu Kosan Co., Ltd. Japan) by a heat-laminating process to prepare a three-layer film. The film was cut into sheets of 150 x 200 mm in dimensions and then two sheets thereof were layered and the edge portions of the sheets were heat-welded by a heat-sealing process to prepare a medical freezer bag of 100 ml in capacity.

### Example 2

The outer side of a 75 µm-thick cut film made of ultra-high molecular weight polyethylene (approximately 1,000,000 in weight average molecular weight based on viscometric method) (New Light, manufactured by SAXIN CORPORATION, Ltd. Japan) was laminated with a 50 µm-thick linear low-density polyethylene film (Moretec, manufactured by Idemitsu Kosan Co., Ltd. Japan), and the inner side of the cut film was laminated with a 50 µm-, 75 µm-, or 100 µm-thick linear low-density polyethylene film (Moretec, manufactured by Idemitsu Kosan Co., Ltd. Japan) by a heat-laminating process to prepare a three-layer film. The film was cut into sheets of 150 x 200 mm in dimensions and then two sheets thereof were layered and the edge portions of the sheets were heat-welded by a heat-sealing process to prepare medical freezer bags of 100 ml in capacity.

### Test Example

The medical freezer bag prepared in Example 1 was filled with 100 ml of an aqueous 5%(v/v) dimethylsulfoxide (DMSO) solution, and deaeration was carried out sufficiently and then the medical freezer bag was placed in an aluminum case. The bag placed in the aluminum case was left standing in a deep freezer (freezing machine) at -80°C for 4 hours to freeze the bag. Subsequently, the frozen bag was transferred into liquid nitrogen and stored for 1 week. The bag stored was taken out of the aluminum case and defrosted in a warm bath at 37 to 40°C, followed by visual observation to confirm whether or not the bag was damaged, the liquid nitrogen was mixed therein, or the like. As a comparative example, each of a commercially available 100-ml bag made of an ethylene-vinyl acetate copolymer (EVA) and a bag made of polyethylene (PE) was subjected to the same experiment while being visually observed 10 times.

The results of the experiment are listed in Table 1. For the ethylene-vinyl acetate copolymer bag (EVA, thickness of the film: 375 µm; Nexell Co. USA), 20% of the sample bags were damaged. For the polyethylene bag (PE, thickness of the film: 70 µm; Charter Med Co. USA), 10% of the sample bags were damaged. In contrast, even though as many as 200 samples of the medical freezer bag of the present invention were subjected to the test conditions, there was no damaged samples were observed.

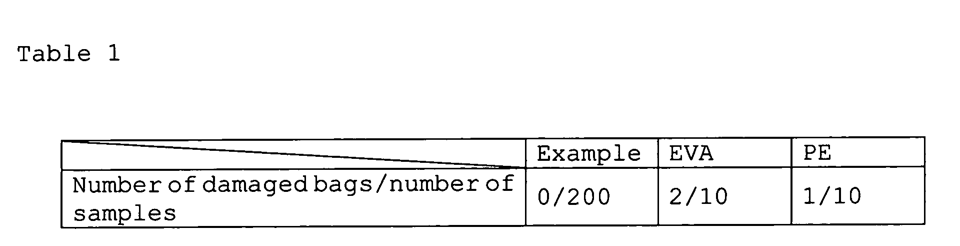

According to the present invention, a medical freezer bag having a sufficient strength, which is not damaged at -196°C, the temperature of liquid nitrogen, and which is excellent in low temperature resistance and molding processability, can be provided, and thus blood, body fluids, and cell suspensions can be aseptically or nontoxically preserved at extremely low temperatures.

## Claims

1. A medical freezer bag comprising a three-layer film where each of both sides of an ultra-high molecular weight polyethylene film is welded to a thermoplastic resin film having a lower melting point than that of the ultra-high molecular weight polyethylene and having compatibility with the ultra-high molecular weight polyethylene.

2. The medical freezer bag according to Claim 1, wherein the thermoplastic resin is an ethylene-vinyl acetate copolymer, an ethylene-methacrylic ester copolymer, or a linear low-density polyethylene.

3. The medical freezer bag according to Claim 1, wherein the ultra-high molecular weight polyethylene has a measured viscometric weight average molecular weight of 1,000,000 or more, or a weight average molecular weight of 3,000,000 or more measured based on a light scattering method.

4. The medical freezer bag according to Claim 1, wherein the three-layer film has a thickness of approximately 50 to 500 µm.

5. The medical freezer bag according to Claim 4, wherein the three-layer film has a thickness of approximately 100 to 250 µm.

6. A method of molding a medical freezer bag, **characterized by** molding (1) a three-layer film obtained by welding each of both sides of a ultra-high molecular weight polyethylene film with a thermoplastic resin film having a lower melting point than that of the ultra-high molecular weight polyethylene and having compatibility with the ultra-high molecular weight polyethylene, and (2) a port member.

7. A method of storing a medical freezer bag, **characterized by** filling the medical freezer bag with blood, a body fluid, or a cell suspension; and storing the medical freezer bag at a temperature ranging from approximately -80 to -196°C, wherein the medical freezer bag comprises a three-layer film where each of both sides of an ultra-high molecular weight polyethylene film is welded to a thermoplastic resin films having a lower melting point than that of the ultra-high molecular weight polyethylene and having compatibility with the ultra-high molecular weight polyethylene.
